# FASCICULE DE BREVET EUROPEEN

(11) **EP 2 655 476 B1**
(45) Date de publication et mention de la délivrance du brevet: **11.04.2018**
(21) Numéro de dépôt: 11802510.5
(22) Date de dépôt: 25.11.2011
(51) Int. Cl.: C08G 65/336, C09J 171/02, C09J 175/04

(54) **PROCÉDÉ DE POSE DE PARQUET Á STABILITÉ DIMENSIONNELLE AMÉLIORÉE**
VERFAHREN ZUM VERLEGEN VON PARKETTBÖDEN MIT VERBESSERTER DIMENSIONSSTABILITÄT
METHOD FOR LAYING PARQUET FLOORING WITH IMPROVED DIMENSIONAL STABILITY

(30) Priorité: 22.12.2010 FR 1061016
(43) Date de publication de la demande: 30.10.2013
(73) Titulaire: BOSTIK SA, 93210 La Plaine Saint Denis (FR)
(72) Inventeur: VERSCHEURE, Eric, F-77670 Vernou la Celle sur Seine (FR); NERY, Laurent, F-93160 Noisy Le Grand (FR)
(74) Mandataire: Chahine, Audrey Claire
(86) Numéro de dépôt international: PCT/FR2011/052761
(87) Numéro de publication internationale: WO 2012/085376

(56) Documents cités:
- EP-A1- 0 671 437
- EP-A2- 0 794 230
- WO-A1-2005/042605
- WO-A1-2008/145458

## Description

La présente invention a pour objet une composition adhésive qui convient à la pose de revêtements à base de bois sur un support rigide plan dans le domaine du bâtiment, et notamment à la pose de parquet. Ladite pose confère à l'assemblage obtenu une stabilité dimensionnelle au cours du temps améliorée, tout particulièrement dans le cas des lames larges de parquet. L'invention concerne également le procédé de pose de revêtement correspondant et ledit assemblage.

Dans le domaine du bâtiment, les adhésifs ou colles sont largement utilisés pour la pose de revêtements à base de bois sur un support rigide plan. On peut ainsi citer la pose de lambris sur une paroi verticale, ou la pose de revêtements à base de bois sur le sol, comme par exemple le parquet. S'agissant du parquet, le support rigide (ou substrat) sur lequel il est fixé est le plus souvent une dalle ou chape de béton (ou de ciment), soit brute soit recouverte d'un enduit de lissage. Le substrat peut être également un ancien carrelage, un ancien parquet, des panneaux de particule ou du contreplaqué.

Le parquet est un revêtement de sol à base de bois qui peut être massif ou contrecollé, et dont les éléments, de forme essentiellement rectangulaire, sont désignés par les termes de lames ou lattes. La pose de parquet sur un support rigide plan, par exemple sur une chape de ciment, est de façon très générale réalisée par collage, cette technique étant en général obligatoire pour des planchers chauffants. A la suite du collage, les lames de parquet deviennent ainsi solidaires du support rigide par l'intermédiaire d'une couche de joint adhésif dont l'épaisseur peut varier de 0,5 à 5 mm, de préférence de 0,5 à 3 mm.

Parmi les adhésifs souvent utilisés pour la pose de parquet, on peut citer les colles solvantées à base par exemple de polyacétate de vinyle à haut poids moléculaire, qui présentent des contraintes de mise en oeuvre liées à la présence de composés organiques volatils. Les colles en dispersion aqueuse, par exemple à base de polyacétate de vinyle à haut poids moléculaire, sont également utilisées, mais présentent certaines restrictions d'emploi car elles ne conviennent pas à la pose de parquet préalablement traité (par des vernis ou des huiles).

Parmi les adhésifs généralement mis en oeuvre pour le collage de parquet, les compositions à base de polymères réticulables par l'humidité atmosphérique sont très appréciées notamment en raison de leur absence de solvant et de composé organique volatil.

On connaît ainsi, notamment par la demande internationale WO 2008/145458, l'utilisation de compositions à base d'un polyéther terminé par des groupes silanes réactifs. Ces polyéthers sont également désignés dans le domaine du bâtiment sous l'appellation de polymères modifiés avec des groupes silanes (ou silyl) ou polymères MS®, disponibles commercialement auprès de la société Kaneka. Un exemple de produit commercial disponible auprès de cette société est le MS - S 303H qui a pour structure la formule indiquée page 3 du document WO 2008/145458.

Lors de l'opération de collage du parquet, ledit polyéther réagit, à température ambiante, avec l'humidité (présente dans l'atmosphère, le substrat et/ou dans le parquet) par l'intermédiaire du groupement silyl qui comprend au moins un groupe hydrolysable lié à l'atome de silicium. Cette réaction conduit à la réticulation des chaînes polymériques au moyen de liaisons siloxanes, et à la création d'un réseau tridimensionnel formant un joint adhésif qui solidarise le parquet et le support rigide.

A la différence du support rigide sur lequel il doit être posé, un revêtement à base de bois est composé d'un matériau vivant qui est susceptible, une fois fixé par collage, de réagir au cours du temps par des déformations aux variations de température et d'hygroscopie du milieu environnant. Il en est ainsi par exemple du parquet.

La sensibilité des lames de parquet à la température et à l'hygrométrie peut avoir pour effet d'entraîner au cours du temps une déformation de celles-ci dans une direction parallèle au plan horizontal du support rigide. C'est en raison de cette déformation qu'il est de pratique courante de laisser, lors de la pose du parquet, un espace libre de 5 à 10 mm (appelé joint périphérique) le long du périmètre de la pièce à parqueter. Cette déformation exerce par conséquent sur le joint adhésif qui reste solidaire du support rigide une contrainte de cisaillement.

La sensibilité du parquet à la température et à l'hygrométrie peut également se traduire par le phénomène indésirable de tuilage. Ce dernier, dont on pense qu'il résulte d'une différence de taux d'humidité entre les faces supérieure et inférieure de la lame, se traduit par une déformation concave de celle-ci particulièrement marquée au voisinage des bords de la lame, qui peut entraîner un décollement partiel, et donc un défaut de planéité de l'ouvrage notamment préjudiciable à son esthétique.

Le problème du tuilage se pose avec d'autant plus d'acuité que l'on assiste actuellement à un intérêt croissant pour les parquets à lames larges. On entend désigner par ce terme des lames dont la largeur dépasse 13 à 14 cm pour atteindre parfois jusqu'à 19 ou 20 cm et qui sont donc, en raison de leur grande largeur, particulièrement exposées au risque de tuilage. La déformation de la lame exerce sur le joint adhésif une contrainte de traction dans une direction essentiellement perpendiculaire au plan du support rigide.

Les colles solvantées comme celles à base de polyacétate de vinyle citées précédemment sont bien adaptées à la prévention du tuilage en raison de leur adhérence très élevée.

Les colles à base de polymères MS® telles que décrites dans la demande internationale WO 2008/145458 présentent toutefois l'inconvénient d'une adhérence inférieure à celle des colles solvantées. Il est estimé qu'un tel comportement résulte au moins en partie d'une résistance mécanique relativement basse de l'adhésif réticulé correspondant, et notamment d'une rigidité insuffisante. On entend désigner par rigidité la propriété mécanique quantifiée par le module d'Young (ou module d'élasticité) qui traduit la déformation du joint adhésif réticulé en réponse à une contrainte de traction qui lui est appliquée. Pour une même déformation, un joint adhésif ayant un module d'élasticité élevé est capable de s'opposer à une contrainte de traction plus grande.

On connaît, notamment par la demande de brevet EP 794230, des compositions comprenant un polymère à motif oxyalkylène et groupe terminal silane dans lesquelles une résine époxy est incorporée pour améliorer la résistance mécanique dudit polymère réticulé.

Toutefois, l'amélioration de la résistance mécanique, et notamment du module d'Young, doit s'accompagner dans le cas d'une composition adhésive convenant à la pose d'un parquet, et notamment d'un parquet à lames larges, du maintien d'une capacité minimale de déformation de la composition adhésive réticulée, de manière à ce que le joint adhésif puisse répondre aux diverses contraintes mentionnées précédemment, sans risque de rupture ou tout au moins avec un risque de rupture diminué.

La présente invention a donc pour but de proposer une composition adhésive réticulable à l'humidité donnant lieu, après sa mise en oeuvre dans le domaine du bâtiment pour la pose de revêtements à base de bois sur un support rigide, à un joint adhésif qui présente une rigidité améliorée combinée à une capacité minimale de déformation sous l'effet de contraintes de traction et/ou de cisaillement.

Un autre but de l'invention est de proposer une telle composition adhésive convenant à la pose de parquet.

Un autre but de l'invention est de proposer une composition adhésive réticulable à l'humidité qui présente une adhérence sur support rigide améliorée.

Un autre but de l'invention est de proposer une composition adhésive réticulable à l'humidité offrant une vitesse de réticulation améliorée, qui convient notamment, dans le cas du parquet, à un maintien suffisant des lames permettant une circulation des personnes sur ledit parquet, peu de temps après sa pose.

Il a à présent été trouvé que ces buts peuvent être atteints, en totalité ou en partie, par la composition décrite ci-après.

La présente invention concerne donc en premier lieu une composition adhésive réticulable à l'humidité comprenant :
- de 25 à 50 % d'une composition (a) consistant :
   - de 5 à 37 % d'une résine époxy réticulable (a1) de type bisphénol A, et
   - de 63 à 95 % d'un polymère (a2) comprenant une chaîne principale choisie parmi (i) un polyoxyalkylène et (ii) un polyuréthane, et qui est reliée à au moins un groupe terminal alkoxysilyl hydrolysable, ledit groupe étant lié dans le cas d'une chaîne principale (i) à un radical divalent alkylène de 1 à 4 atomes de carbone qui est lui-même lié aux extrémités de la chaîne (i) par un groupement divalent A de formule choisie parmi l'une des formules suivantes :

      -O-CO-NH- (Ia)

      -NR¹-CO-NH- (Ib)

      dans laquelle R¹ représente un atome d'hydrogène ou un radical C₁-C₃ alkyle ;

      -S-CO-NH- ; (Ic)
- de 0,5 % à 6 % d'une cétimine (b) en tant que précurseur de l'agent de réticulation de la résine époxy (a1) ; et
- de 40 à 65 % d'une charge inerte minérale ou organique (c).

En l'absence d'indication contraire, les teneurs en ingrédients compris dans la composition adhésive selon l'invention (notamment en (a), (b) et (c)) sont exprimées dans le présent texte en pourcentages poids/poids relatifs au poids total de ladite composition adhésive. Les teneurs en ingrédients de la composition (a) sont également des pourcentages poids/poids.

La composition selon l'invention présente avantageusement après réticulation une résistance mécanique améliorée, correspondant notamment à un module d'Young supérieur à 10 MPa. De plus ladite composition réticulée présente également -lorsqu'elle est soumise à des contraintes de traction et/ou cisaillement- un risque de cassure très limité, du fait d'un allongement à la rupture en traction d'au moins 30 % et d'un allongement à la rupture en cisaillement d'au moins 200 %.

La résine époxy réticulable (a1) de type bisphénol A mise en oeuvre dans le mélange (a) est définie, au sens de la présente invention, comme un composé comprenant 2 groupes époxy et susceptible d'être obtenu par réaction de haloépoxydes tels que l'épichlorhydrine (également dénommée 2-(chloromethyl)oxirane) ou la β-méthyl-épichlorhydrine avec le bisphénol A, le bisphénol AD ou le bisphénol F.

Le bisphénol A (ou 2,2-bis(4-hydroxyphényl) propane) a pour formule :

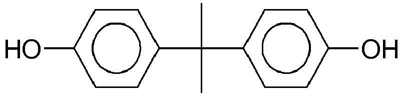

Le bisphénol AD (ou 1,1-bis(4-hydroxyphényl)-éthane) a pour formule :

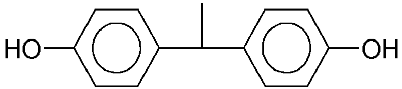

Le bisphénol F (bis(4-hydroxyphényl) méthane) a pour formule :

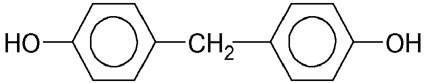

On préfère utiliser comme résine époxy réticulable de type bisphénol A le diglycidyl éther de bisphenol A (également connu sous le sigle DGEBA), de formule :

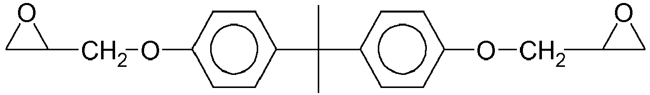

Ce dernier composé est disponible dans le commerce, par exemple sous la dénomination de D.E.R.™ 331 ™ auprès de la société Dow.

Les polymères à groupe terminal alkoxysilyl hydrolysable sont bien connus dans le domaine des adhésifs. Ledit groupe est de préférence un radical alkoxysilyl ayant pour formule :

- Si(R²)ₚ(OR³)₃₋ₚ (II)

dans laquelle :
- R² et R³, identiques ou différents, représentent chacun un radical alkyle linéaire ou ramifié de 1 à 4 atomes de carbone, avec la possibilité lorsqu'il y a plusieurs radicaux R² ou R³ que ceux-ci soient identiques ou différents ;
- p est un nombre entier égal à 0, 1 ou 2.

En général, le nombre moyen de groupes terminaux alkoxysilyl par chaîne principale du polymère (a2) est égal à environ 2, chaque groupe étant situé à une extrémité de la chaîne.

De préférence, le radical alkoxysilyl est choisi parmi les radicaux de formule suivante :

-Si(OCH₃)₃, -Si(CH₃)(OCH₃)₂, -Si(OCH₂CH₃)₃, -Si(CH₃)(OCH₂CH₃)₂.

La chaîne principale du polymère (a2) peut être un polyoxyalkylène (i). Elle correspond alors à un motif de répétition de formule :

-R⁴-O- (III)

dans laquelle R⁴ est un groupe alylène linéaire ou ramifié comprenant de 1 à 5 atomes de carbone.

On peut donner comme exemples spécifiques du motif de répétition de formule (III) les radicaux suivants :

-CH₂O- -CH₂CH₂O- -CH₂CH(CH₃)O- -CH₂CH(C₂H₅)O--CH₂C(CH₃)₂O- -CH₂CH₂CH₂CH₂O-

Selon une variante préférée, le motif de répétition de formule (III) est :

-CH₂CH(CH₃)O-

soit un motif isopropoxy, correspondant à une chaîne principale polypropylène glycol.

Dans le cas d'une chaîne principale (i), chaque groupe terminal alkoxysilyl est lié à un radical divalent alkylène de 1 à 4 atomes de carbone qui est lui-même lié aux extrémités de la chaîne (i) par le groupement divalent A défini ci-dessus.

De préférence, le radical alkylène représente un des radicaux de formule : -CH₂- ou - CH₂-CH₂-CH₂-, et le groupement divalent A est la fonction uréthane (formule Ia).

Selon un mode de réalisation encore plus particulièrement préféré pour la vitesse de réticulation améliorée de la composition adhésive, le radical alkylène est un radical méthylène de formule -CH₂-.

Les polymères (a2) ayant pour chaîne principale (i) peuvent être préparés par des procédés connus en soi, comme par réaction de polyoxyalkylènes à terminaison -OH avec un isocyanatosilane dans lequel le groupe isocyanato est relié au groupe silane par un radical alkylène de 1 à 4 atomes de carbone. Les brevets US 2005/0119421 ou US 2004/0181025 donnent des exemples de ces procédés. On peut citer comme exemple commercial de tels polymères le GENIOSIL® STP-E 10 commercialisé par la société Wacker dont chacun des 2 groupes silyl terminaux a pour formule : -Si(CH₃)(OCH₃)₂ et est relié directement, par l'intermédiaire du groupe : -O-CO-NH-CH₂-, à une extrémité de la chaîne principale polypropylène glycol.

La chaîne principale du polymère (a2) peut être, conformément à une variante préférée de la composition adhésive selon l'invention, un polyuréthane (ii). Un tel polyuréthane est obtenu par condensation d'un polyisocyanate avec un polyol, de préférence un polyéther polyol ou un polyester polyol. Le polymère (a2) correspondant peut être préparé par des procédés connus en soi, par exemple tels que décrits par les brevets :
US 3632557, US 3979344, US 5298572, WO 93/05089, EP 770633, EP 1178069.

On peut citer comme exemples commerciaux de tels polymères :
- le DESMOSEAL® S XP 2636 commercialisé par la société Bayer MaterialScience ;
- les SPUR+* Y 15986 et SPUR+* Y 15987 de la société Momentive.

Selon une autre variante préférée, la teneur en résine époxy réticulable (a1) de type bisphénol A comprise dans la composition (a) va de 10 à 33 %, et la teneur en polymère (a2) dans cette même composition va de 67 à 90 %.

La composition selon l'invention comprend de 0,5 % à 6 % d'une cétimine (b) en tant que précurseur de l'agent de réticulation de la résine époxy (a1).

De préférence la cétimine (b) a pour formule :

(R⁶R⁷C=N)_{q}R⁵ (IV)

dans laquelle :
- R⁵ est un radical organique ayant de 1 à 3 valences libres, choisi de préférence parmi un C₁-C₁₂ alkyle ou un C₆-C₂₄ aryle, éventuellement substitués ;
- R⁶ et R⁷, identiques ou différents, représentent un atome d'hydrogène, un groupe phényle ou un groupe alkyle comprenant de 1 à 6 atomes de carbone, éventuellement substitué
- q est un entier égal à 1, 2 ou 3.

La préparation de telles cétimines peut être effectuée par des réactions conventionnelles de condensation d'une amine avec un composé carbonylé comme décrit dans la demande EP 794230 précitée.

La cétimine est présente de manière stable dans la composition selon l'invention conditionnée à l'abri de l'humidité. Lorsque la composition est appliquée comme adhésif, la cétimine se décompose sous l'action de l'humidité atmosphérique ou de l'humidité présente dans les substrats pour former une amine primaire et une cétone. L'amine primaire ainsi formée réagit avec la résine époxy (a1) à température ambiante, en tant qu'agent de réticulation de celle-ci.

Selon une variante préférée de l'invention, on utilise la cétimine (b) de formule (IV) dans laquelle :
- q = 2 ;
- R⁵ est le radical divalent dérivé de l'isophorone, de formule : 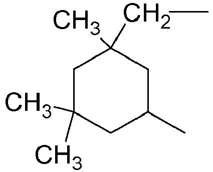
- R⁶ est un méthyle et R⁷ est un isobutyle.

Une telle cétimine est disponible dans le commerce auprès de la société Bayer sous la dénomination de DESMOPHEN® LS 2965 A.

La composition adhésive objet de l'invention comprend également de 40 à 65 % d'une charge inerte minérale ou organique (c) qui a pour fonction de renforcer le joint adhésif obtenu après réticulation.

Les charges inertes minérales ou organiques utilisables sont sous forme pulvérulente et sont par exemple choisies parmi les carbonates (carbonate de calcium ou de magnésium), l'acide silicique anhydre ou hydraté, le quartz, la silice, notamment pyrogénée, les silicates (de calcium, sodium, potassium, aluminium ou magnésium) en particulier les silicates de magnésium éventuellement hydratés (talc), l'oxyde de calcium, les métaux et leurs oxydes, notamment l'oxyde de titane, le noir de carbone, l'argile, la cellulose ou la poudre (ou farine) de bois. Ces charges sont généralement sous forme de particules de taille comprise entre environ 1 et 50 µm.

Une charge minérale choisie parmi le carbonate de calcium ou une silice pyrogénée est préférée.

Selon un mode de réalisation particulièrement préféré de la composition selon l'invention, celle-ci contient :
- une teneur de la composition (a) comprise dans le domaine allant de 30 à 40 %, et de manière encore plus préférée de 30 à 35 % ;
- une teneur de cétimine (b) variant de 1 à 5 % ; et
- une teneur de la charge minérale (c) allant de 50 à 60 %, et de façon plus particulièrement avantageuse de 55 à 60 %.

La composition adhésive selon l'invention peut éventuellement comprendre jusqu'à 1 % d'un catalyseur de réticulation qui peut être tout catalyseur connu par l'homme du métier pour la condensation de silanol, soit en général des amines ou des dérivés organométalliques, et notamment des dérivés organiques de fer, d'étain divalent ou tétravalent, de titane, d'aluminium qui sont pour la plupart disponibles dans le commerce.

On peut citer ainsi comme exemples de catalyseurs de type organoétains : le dilaurate de dibutylétain, le diacetylacétonate de dibutylétain ou le diacetylacétonate de dioctylétain. Le diacetylacétonate de dibutylétain est disponible auprès de la société TIB Chemicals sous la dénomination TIB KAT® 226.

Une teneur pour ledit catalyseur de 0,05 à 0,6 % est plus particulièrement préférée.

La composition adhésive selon l'invention peut en outre comprendre jusqu'à 10 % d'un plastifiant choisi par exemple parmi les phtalates ou les huiles minérales d'origine pétrolière, les huiles paraffiniques, les polyoléfines ou les mélanges de ces substances. On peut citer comme exemple de produit commercial l'Hydroseal G3H (de la société Total) qui est un mélange de distillats moyens de pétrole hydrotraités ayant une viscosité (mesurée à 23 °C par un viscosimètre Brookfield équipé du mobile 2V100 selon la norme ASTM D 445) de 24 mPa.s,

On préfère contrôler la teneur en humidité de la composition selon l'invention de manière à empêcher une réticulation immédiate du polymère (a2) résultant dans une augmentation de la viscosité ou même dans la solidification de la composition durant son stockage. L'humidité peut être apportée à la composition par certains de ses ingrédients, par exemple par la charge minérale (c).

Pour cette raison, la composition selon l'invention peut contenir un ou plusieurs agents desséchants (ou piégeurs d'humidité). Des agents desséchants appropriés sont notamment des alkoxysilanes tels que des trialkoxysilanes (particulièrement des triméthoxysilanes) et des alkoxysilanes contenant un groupe amino, mercapto ou époxy. On peut en donner comme exemples le vinyltriméthoxysilane, le gamma-glycidyloxypropyltriméthoxysilane, le N-beta-(aminoéthyl)-gamma-aminopropyltriméthoxysilane, l'aminopropyltriméthoxysilane, le triméthoxyméthylsilane. Une quantité d'agents desséchants dans la composition comprise entre 0,5 et 5 %, de préférence aux environs de 1 %, sera en général convenable.

Certains de ces composés peuvent également agir en tant qu'agent promoteur d'adhérence, particulièrement les trialkoxysilanes contenant un groupe amino, mercapto ou époxy. Une quantité de 0,5 à 2 % sera en général appropriée.

La composition selon l'invention peut également contenir d'environ 0,5 à 2 % d'un diluant réactif de type glycidyl éther d'alcool gras.

La composition selon l'invention est préparée par simple mélange à température ambiante de ses ingrédients, après séchage de la charge inerte (c).

L'invention concerne également un procédé de pose d'un revêtement à base de bois sur un support rigide plan comprenant une étape de répartition sur la surface dudit support d'une quantité effective de la composition adhésive réticulable à l'humidité telle que définie précédemment.

Selon une variante préférée du procédé, le revêtement à base de bois est un parquet, et de façon avantageuse un parquet dont les lames ont une largeur comprise entre 13 et 20 cm.

La composition adhésive est avantageusement répartie sur le support sous la forme d'une couche substantiellement homogène, au moyen par exemple d'une spatule crantée, cette modalité d'application étant désignée dans le métier par la dénomination de « collage en plein ». La quantité de composition adhésive appliquée sur le support peut varier dans un large domaine allant par exemple de 0,8 à 3,5 kg par m².

L'invention concerne enfin un assemblage comprenant un support rigide plan revêtu d'un revêtement à base de bois par l'intermédiaire d'une couche substantiellement homogène de la composition adhésive (telle que définie précédemment) réticulée, et formant joint adhésif. L'épaisseur de la couche de joint adhésif est généralement comprise entre 0,5 et 5 mm, de préférence entre 0,5 et 3 mm.

L'assemblage dans lequel ledit revêtement est un parquet, et utilisable comme plancher, est plus particulièrement préféré.

Les exemples suivants sont donnés à titre purement illustratif de l'invention et ne sauraient être interprétés de manière à en limiter la portée.

### Exemples 1 à 5 :

Des compositions adhésives réticulables à l'humidité sont préparées par simple mélange à température ambiante des ingrédients indiqués dans le Tableau suivant, après séchage de la charge inerte (c). Outre ces ingrédients, la composition contient également 1,5 % d'agents desséchant et promoteur d'adhérence, 1 % de diluant réactif, 0,5% d'une silice pyrogénée et 5 % d'Hydroseal G3H.

Les compositions adhésives obtenues sont soumises aux mesures et test suivants.

### Mesure du module d'Young et de l'allongement à la rupture par traction de la composition réticulée :

Cette mesure est effectuée conformément à la norme NF ISO 37.

Une éprouvette haltère de Type 1 (longueur de la partie étroite de l'haltère égale à 25 mm pour une largeur de 6 mm et une épaisseur de 2 mm) est obtenue par découpe à l'emporte-pièce dans un film de la composition adhésive préalablement réticulé après séjour durant 7 jours dans une atmosphère maintenue à 23°C et 50 % d'humidité relative.

L'éprouvette ainsi obtenue est étirée dans une machine de traction, dont la mâchoire mobile se déplace à une vitesse constante égale à 50 mm/minute. On enregistre la contrainte appliquée et l'allongement de l'éprouvette (exprimé en %) durant son étirement et au moment de sa rupture.

Le module d'Young (exprimé en MPa) est la pente de la tangente à l'origine de la courbe portant la contrainte de traction en fonction de l'allongement.

Les résultats sont indiqués dans le Tableau.

### Mesure de l'allongement à la rupture par cisaillement de la composition réticulée :

On prépare un assemblage de 2 lames de parquet collées au moyen de la composition adhésive conformément à la norme NF EN 14293.

On utilise 2 lames en chêne rectangulaires de longueur 14 cm, de largeur 2,4 cm et d'épaisseur 1 cm.

La composition adhésive est appliquée de manière à obtenir un collage par recouvrement des 2 lames sur une surface d'environ 600 mm², l'épaisseur de la couche adhésive étant de 1 mm.

La réticulation de la composition conduisant à la formation du joint adhésif est obtenue en maintenant l'assemblage durant 7 jours à 23°C et 50 % d'humidité relative.

L'assemblage ainsi obtenu est inséré dans les mâchoires d'une machine d'essai de traction et une force de traction est appliquée à une vitesse constante égale à 20 mm/minute, conduisant au cisaillement du joint adhésif, jusqu'à la rupture de ce dernier.

La valeur de l'allongement est déterminée (en %) et portée dans le Tableau.

### Test de l'adhérence de parquet collé sur une plaque de béton :

L'adhérence obtenue pour un parquet collé sur une plaque de béton, par mise en oeuvre de la composition adhésive, est évaluée selon la norme NF EN 14293.

On utilise une plaque de béton carrée de 50 cm de côté et 5 cm d'épaisseur.

La composition adhésive est répartie uniformément sur la surface de cette dalle au moyen d'une spatule crantée de manière à déposer sur ladite surface une couche adhésive correspondant à une quantité totale (ou dose) de 1 kg/m², correspondant à une épaisseur de 0,6 mm.

Des pièces de parquet en chêne massif brut, de dimensions 50 mm x 50 mm x 10 mm sont appliquées dans la couche adhésive fraîche, à raison de 10 pièces par plaque, distantes d'environ 50 mm.

La plaque ainsi revêtue est ensuite stockée à température ambiante durant 7 jours.

On mesure alors la force de résistance à la séparation (ou arrachement) entre une pièce de parquet et le support en béton, sous l'effet d'une force de traction exercée dans une direction perpendiculaire au plan de la dalle.

La force de traction est générée au moyen d'un dynamomètre et est transmise à la pièce de parquet par l'intermédiaire d'une baguette métallique dont la base recouvre sensiblement la pièce et qui est profilée en forme de T.

Cette baguette métallique est rendue solidaire de la pièce de parquet par collage de sa base au moyen d'une colle époxy, le joint de colle obtenu ayant une cohésion très largement supérieure à celle de la liaison entre la pièce et la surface de béton. La partie verticale de la baguette métallique (correspondant à la barre verticale du T) est rendue solidaire de l'axe du dynamomètre par une goupille.

On effectue alors un essai de traction et l'on note la valeur de la résistance à l'arrachement, exprimée en MPa, qui est indiquée dans le Tableau.

### Exemple 6 (comparatif) :

On répète l'exemple 1 en remplaçant le SPUR+* Y 15987 par le MS - S 303H.

Le MS - S 303H est un polymère disponible auprès de Kaneka de structure :

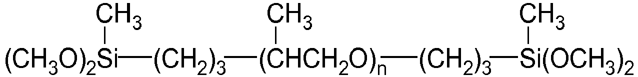

Les résultats obtenus sont indiqués dans le Tableau.

### Exemple 7 (comparatif) :

On répète l'exemple 3 en remplaçant le GENIOSIL® STP-E 10 par le MS - S 303H. On obtient les résultats indiqués dans le Tableau.

### Exemple 8 (comparatif) :

On répète l'exemple 1 en utilisant les teneurs indiquées dans le Tableau pour les composants de la composition (a) et pour les autres ingrédients de la composition adhésive. On obtient les résultats indiqués.

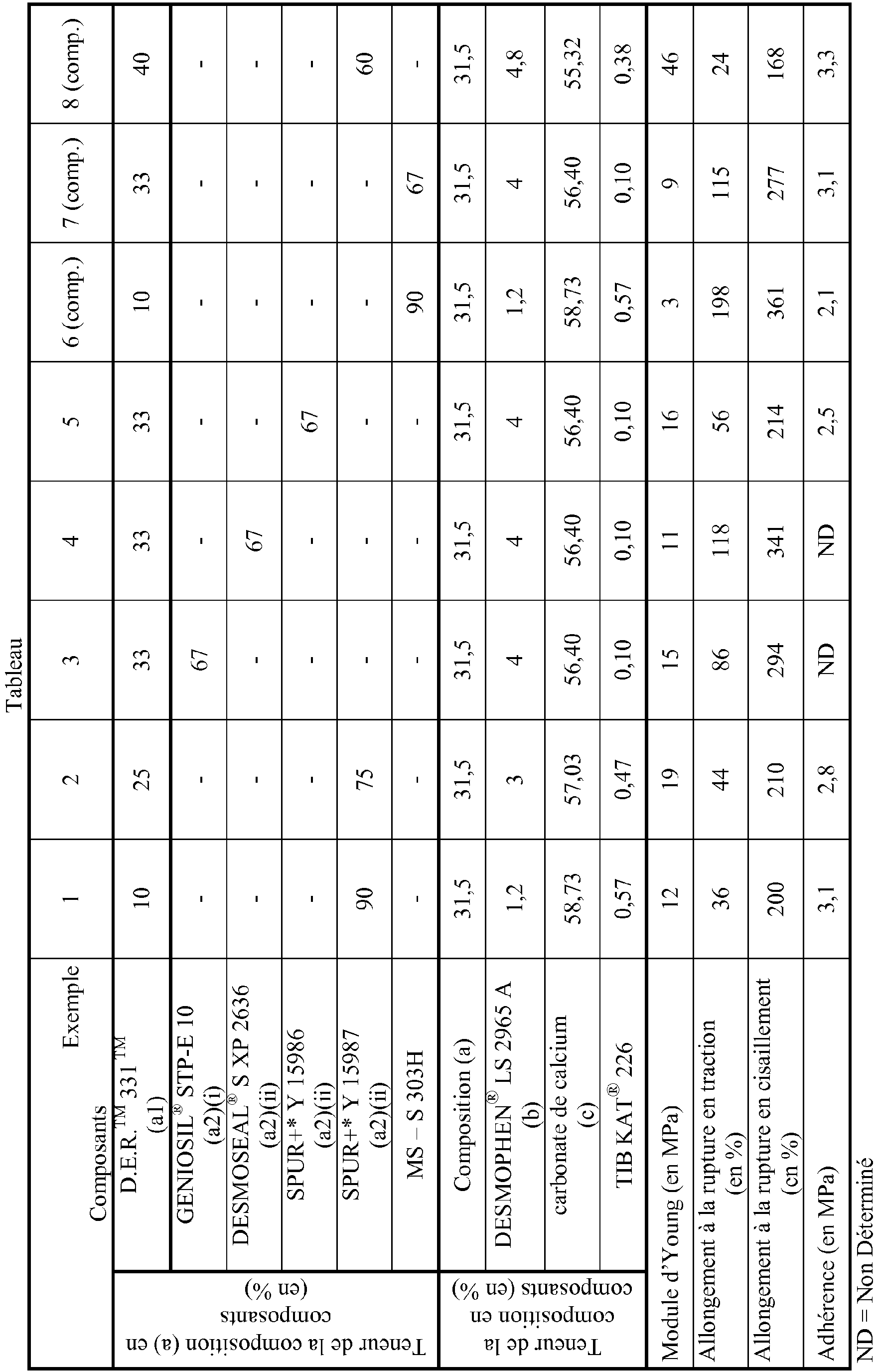

## Revendications

1. Composition adhésive réticulable à l'humidité comprenant :
- de 25 à 50 % d'une composition (a) consistant :
- de 5 à 37 % poids/poids d'une résine époxy réticulable (a1) de type bisphénol A, et
- de 63 à 95 % poids/poids d'un polymère (a2) comprenant une chaîne principale choisie parmi (i) un polyoxyalkylène et (ii) un polyuréthane, et qui est reliée à au moins un groupe terminal alkoxysilyl hydrolysable, ledit groupe étant lié dans le cas d'une chaîne principale (i) à un radical divalent alkylène de 1 à 4 atomes de carbone qui est lui-même lié aux extrémités de la chaîne (i) par un groupement divalent A de formule choisie parmi l'une des formules suivantes :
-O-CO-NH- (Ia)
-NR¹-CO-NH- (Ib)
dans laquelle R¹ représente un atome d'hydrogène ou un radical C1-C3 alkyle ;
-S-CO-NH- (Ic) ;
- de 0,5 % à 6 % d'une cétimine (b) en tant que précurseur de l'agent de réticulation de la résine époxy (a1) ; et
- de 40 à 65 % d'une charge inerte minérale ou organique (c) ;
les teneurs en ingrédients (a), (b) et (c) étant exprimées en pourcentages poids/poids relatifs au poids total de ladite composition adhésive.

2. Composition adhésive selon la revendication 1, **caractérisée en ce que** l'on utilise comme résine époxy réticulable (a1) le diglycidyl éther de bisphenol A de formule :

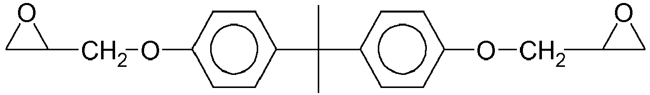

3. Composition adhésive selon l'une des revendications 1 ou 2, **caractérisée en ce que** le groupe terminal alkoxysilyl hydrolysable a pour formule :
- Si(R²)ₚ(OR³)₃₋ₚ (II)
dans laquelle :
- R² et R³, identiques ou différents, représentent chacun un radical alkyle linéaire ou ramifié de 1 à 4 atomes de carbone, avec la possibilité lorsqu'il y a plusieurs radicaux R² ou R³ que ceux-ci soient identiques ou différents ;
- p est un nombre entier égal à 0, 1 ou 2.

4. Composition adhésive selon l'une des revendications 1 à 3, **caractérisée en ce que** le polymère (a2) a une chaîne principale (i) polypropylène glycol, le radical divalent alkylène a pour formule : -CH₂- ou -CH₂-CH₂-CH₂-, et le groupement divalent A est la fonction uréthane.

5. Composition adhésive selon l'une des revendications 1 à 4, **caractérisée en ce que** le polymère (a2) a une chaîne principale (i) polypropylène glycol et **en ce que** le radical divalent alkylène est un radical méthylène de formule -CH₂-.

6. Composition adhésive selon l'une des revendications 1 à 3, **caractérisée en ce que** le polymère (a2) a pour chaîne principale un polyuréthane (ii).

7. Composition adhésive selon l'une des revendications 1 à 6, **caractérisée en ce que** la teneur en résine époxy réticulable (a1) comprise dans la composition (a) va de 10 à 33 %, et la teneur en polymère (a2) dans cette même composition va de 67 à 90 %.

8. Composition adhésive selon l'une des revendications 1 à 7, **caractérisée en ce que** la cétimine (b) a pour formule :
(R⁶R⁷C=N)_{q}R⁵ (IV)
dans laquelle :
- R⁵ est un radical organique ayant de 1 à 3 valences libres, choisi de préférence parmi un C₁-C₁₂ alkyle ou un C₆-C₂₄ aryle, éventuellement substitués ;
- R⁶ et R⁷, identiques ou différents, représentent un atome d'hydrogène, un groupe phényle ou un groupe alkyle comprenant de 1 à 6 atomes de carbone, éventuellement substitué
- q est un entier égal à 1, 2 ou 3.

9. Composition adhésive selon la revendication 8, **caractérisée en ce que** on utilise la cétimine (b) de formule (IV) dans laquelle q égale 2, R⁵ est le radical divalent dérivé de l'isophorone, R⁶ est un méthyle, et R⁷ est un isobutyle.

10. Composition adhésive selon l'une des revendications 1 à 9, **caractérisée en ce que** la charge minérale (c) est choisie parmi le carbonate de calcium ou une silice pyrogénée.

11. Composition adhésive selon l'une des revendications 1 à 10, **caractérisée en ce qu'**elle contient :
- une teneur de la composition (a) comprise dans le domaine allant de 30 à 40 % ;
- une teneur de cétimine (b) variant de 1 à 5 % ; et
- une teneur de la charge minérale (c) allant de 50 à 60 %.

12. Procédé de pose d'un revêtement à base de bois sur un support rigide plan comprenant une étape de répartition sur la surface dudit support d'une quantité effective de la composition adhésive telle que définie dans l'une des revendications 1 à 11.

13. Procédé de pose selon la revendication 12, **caractérisé en ce que** le revêtement à base de bois est un parquet.

14. Procédé de pose selon l'une des revendications 12 ou 13, **caractérisé en ce que** la composition adhésive est répartie sur le support sous la forme d'une couche substantiellement homogène.

15. Assemblage comprenant un support rigide plan revêtu d'un revêtement à base de bois par l'intermédiaire d'une couche substantiellement homogène de la composition adhésive, telle que définie dans l'une des revendications 1 à 11, réticulée et formant joint adhésif.

16. Assemblage selon la revendication 15, **caractérisé en ce que** le revêtement est un parquet, et **en ce qu'**il est utilisable comme plancher.

## Patentansprüche

1. Feuchtigkeitsvernetzbare Klebstoffzusammensetzung, umfassend:
- von 25 bis 50 % einer Zusammensetzung (a), bestehend aus:
- von 5 bis 37 Gew.-% eines vernetzbaren Epoxidharzes (a1) vom Bisphenol-A-Typ und
- von 63 bis 95 Gew.-% eines Polymers (a2), das eine Hauptkette umfasst, die aus (i) einem Polyoxyalkylen und (ii) einem Polyurethan ausgewählt ist und die mit einer hydrolysierbaren Alkoxysilyl-Endgruppe verknüpft ist, wobei die Gruppe im Fall einer Hauptkette (i) mit einem zweiwertigen Alkylenrest mit 1 bis 4 Kohlenstoffatomen verbunden ist, der selbst durch eine zweiwertige Gruppe A einer Formel, die aus einer der folgenden Formeln ausgewählt ist, mit den Enden der Kette (i) verbunden ist:
-O-CO-NH- (Ia) ;
-NR¹-CO-NH- (Ib),
in der R¹ für ein Wasserstoffatom oder einen C1-C3-Alkylrest steht;
-S-CO-NH- (Ic);
- von 0,5 % bis 6 % eines Ketimins (b) als ein Vorläufer des Vernetzungsmittels des Epoxidharzes (a1) und
- von 40 bis 65 % eines anorganischen oder organischen inerten Füllstoffs (c);
wobei die Gehalte der Bestandteile (a), (b) und (c) als Gewichtsprozente in Bezug auf das Gesamtgewicht der Klebstoffzusammensetzung ausgedrückt sind.

2. Klebstoffzusammensetzung nach Anspruch 1, **dadurch gekennzeichnet, dass** als vernetzbares Epoxidharz (a1) der Diglycidylether von Bisphenol A der folgenden Formel verwendet wird:

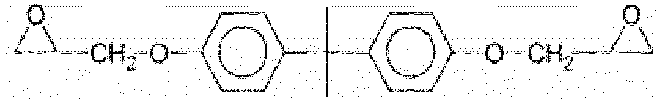

3. Klebstoffzusammensetzung nach einem der Ansprüche 1 oder 2, **dadurch gekennzeichnet, dass** die hydrolysierbare Alkoxysilyl-Endgruppe die folgende Formel aufweist:
-Si(R²)ₚ(OR³)₃₋ₚ (II),
in der:
- R² und R³, die gleich oder verschieden sind, jeweils für einen linearen oder verzweigten Alkylrest mit 1 bis 4 Kohlenstoffatomen stehen, mit der Möglichkeit, dass, wenn mehrere Reste R² oder R³ vorliegen, diese gleich oder verschieden sind;
- p eine ganze Zahl ist, die gleich 0, 1 oder 2 ist.

4. Klebstoffzusammensetzung nach einem der Ansprüche 1 bis 3, **dadurch gekennzeichnet, dass** das Polymer (a2) eine Polypropylenglykol-Hauptkette (i) aufweist, der zweiwertige Alkylenrest die folgende Formel aufweist: - CH₂- oder -CH₂-CH₂-CH₂- und die zweiwertige Gruppe A die Urethanfunktion ist.

5. Klebstoffzusammensetzung nach einem der Ansprüche 1 bis 4, **dadurch gekennzeichnet, dass** das Polymer (a2) eine Polypropylenglykol-Hauptkette (i) aufweist und dass der zweiwertige Alkylenrest ein Methylenrest der Formel -CH₂-ist.

6. Klebstoffzusammensetzung nach einem der Ansprüche 1 bis 3, **dadurch gekennzeichnet, dass** das Polymer (a2) ein Polyurethan (ii) als Hauptkette aufweist.

7. Klebstoffzusammensetzung nach einem der Ansprüche 1 bis 6, **dadurch gekennzeichnet, dass** der Gehalt des vernetzbaren Epoxidharzes (a1), der in der Zusammensetzung (a) enthalten ist, von 10 bis 33 % reicht und der Gehalt des Polymers (a2) in derselben Zusammensetzung von 67 bis 90 % reicht.

8. Klebstoffzusammensetzung nach einem der Ansprüche 1 bis 7, **dadurch gekennzeichnet, dass** das Ketimin (b) die folgende Formel aufweist:
(R⁶R⁷C=N)_{q}R⁵ (IV),
in der:
- R⁵ ein organischer Rest mit 1 bis 3 freien Wertigkeiten ist, der vorzugsweise aus einem C₁-C₁₂-Alkyl oder einem C₆-C₂₄-Aryl, die gegebenenfalls substituiert sind, ausgewählt ist;
- R⁶ und R⁷, die gleich oder verschieden sind, für ein Wasserstoffatom, eine Phenylgruppe oder eine Alkylgruppe, die 1 bis 6 Kohlenstoffatome umfasst und die gegebenenfalls substituiert ist, steht;
- q eine ganze Zahl ist, die gleich 1, 2 oder 3 ist.

9. Klebstoffzusammensetzung nach Anspruch 8, **dadurch gekennzeichnet, dass** das Ketimin (b) der Formel (IV), in der q gleich 2 ist, R⁵ der zweiwertige Rest ist, der von Isophoron abgeleitet ist, R⁶ ein Methyl ist und R⁷ ein Isobutyl ist, verwendet wird.

10. Klebstoffzusammensetzung nach einem der Ansprüche 1 bis 9, **dadurch gekennzeichnet, dass** der anorganische Füllstoff (c) aus Calciumcarbonat oder einem pyrogenen Siliciumdioxid ausgewählt ist.

11. Klebstoffzusammensetzung nach einem der Ansprüche 1 bis 10, **dadurch gekennzeichnet, dass** sie Folgendes enthält:
- einen Gehalt der Zusammensetzung (a) in dem Bereich, der von 30 bis 40 % reicht;
- einen Gehalt des Ketimins (b), der von 1 bis 5 % variiert; und
- einen Gehalt des anorganischen Füllstoffs (c), der von 50 bis 60 % reicht.

12. Verfahren zum Verlegen eines Belags auf Holzbasis auf einen ebenen steifen Träger, wobei das Verfahren einen Schritt des Verteilens einer wirksamen Menge der wie in den Ansprüchen 1 bis 11 definierten Klebstoffzusammensetzung auf der Oberfläche des Trägers umfasst.

13. Verlegungsverfahren nach Anspruch 12, **dadurch gekennzeichnet, dass** der Belag auf Holzbasis ein Parkettboden ist.

14. Verlegungsverfahren nach einem der Ansprüche 12 oder 13, **dadurch gekennzeichnet, dass** die Klebstoffzusammensetzung auf dem Träger in der Form einer im Wesentlichen homogenen Schicht verteilt wird.

15. Verbund, der einen ebenen steifen Träger umfasst, der mit einem Belag auf Holzbasis mittels einer im Wesentlichen homogenen Schicht der wie in den Ansprüchen 1 bis 11 definierten Klebstoffzusammensetzung beschichtet ist, die vernetzt ist und eine Klebefuge bildet.

16. Verbund nach Anspruch 15, **dadurch gekennzeichnet, dass** der Belag ein Parkettboden ist und dass er als Fußboden verwendbar ist.

## Claims

1. Moisture-crosslinkable adhesive composition comprising:
- from 25% to 50% of a composition (a) consisting:
- of 5% to 37% weight/weight of a crosslinkable epoxy resin (a1) of bisphenol A type, and
- of 63% to 95% weight/weight of a polymer (a2) comprising a main chain chosen from (i) a polyoxyalkylene and (ii) a polyurethane which is connected to at least one hydrolyzable terminal alkoxysilyl group, said group being bonded, in the case of a main chain (i), to a divalent alkylene radical of 1 to 4 carbon atoms which is itself bonded to the ends of the chain (i) by a divalent group A having a formula chosen from one of the following formulae:
-O-CO-NH- (Ia)
-NR¹-CO-NH- (Ib)
in which R¹ represents a hydrogen atom or a C₁-C₃ alkyl radical;
-S-CO-NH- (Ic);
- from 0.5% to 6% of a ketimine (b) as precursor of the crosslinking agent for the epoxy resin (a1); and
- from 40% to 65% of an inert inorganic or organic filler (c);
the contents of ingredients (a), (b) and (c) being expressed as weight/weight percentages with respect to the total weight of said adhesive composition.

2. Adhesive composition according to Claim 1, **characterized in that** use is made, as crosslinkable epoxy resin (a1), of bisphenol A diglycidyl ether of formula:

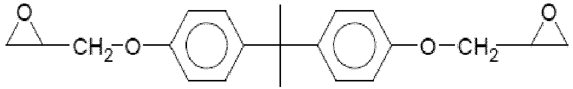

3. Adhesive composition according to either of Claims 1 and 2, **characterized in that** the hydrolyzable terminal alkoxysilyl group has the formula:
-Si(R²)ₚ(OR³)₃₋ₚ (II)
in which:
- R² and R³, which are identical or different, each represent a linear or branched alkyl radical of 1 to 4 carbon atoms, with the possibility, when there are several R² or R³ radicals, that these are identical or different;
- p is an integer equal to 0, 1 or 2.

4. Adhesive composition according to one of Claims 1 to 3, **characterized in that** the polymer (a2) has a polypropylene glycol main chain (i), the divalent alkylene radical has the formula -CH₂- or -CH₂-CH₂-CH₂- and the divalent group A is the urethane functional group.

5. Adhesive composition according to one of Claims 1 to 4, **characterized in that** the polymer (a2) has a polypropylene glycol main chain (i) and **in that** the divalent alkylene radical is a methylene radical of formula -CH₂-.

6. Adhesive composition according to one of Claims 1 to 3, **characterized in that** the polymer (a2) has a polyurethane (ii) for main chain.

7. Adhesive composition according to one of Claims 1 to 6, **characterized in that** the content of crosslinkable epoxy resin (a1) included in the composition (a) ranges from 10% to 33% and the content of polymer (a2) in this same composition ranges from 67% to 90%.

8. Adhesive composition according to one of Claims 1 to 7, **characterized in that** the ketimine (b) has the formula:
(R⁶R⁷C=N)_{q}R⁵ (IV)
in which:
- R⁵ is an organic radical having from 1 to 3 free valences, preferably chosen from a C₁-C₁₂ alkyl or a C₆-C₂₄ aryl, which are optionally substituted;
- R⁶ and R⁷, which are identical or different, represent a hydrogen atom, a phenyl group or an alkyl group comprising from 1 to 6 carbon atoms, which is optionally substituted;
- q is an integer equal to 1, 2 or 3.

9. Adhesive composition according to Claim 8, **characterized in that** use is made of the ketimine (b) of formula (IV) in which q is equal to 2, R⁵ is the divalent radical derived from isophorone, R⁶ is a methyl and R⁷ is an isobutyl.

10. Adhesive composition according to one of Claims 1 to 9, **characterized in that** the inorganic filler (c) is chosen from calcium carbonate or a fumed silica.

11. Adhesive composition according to one of Claims 1 to 10, **characterized in that** it comprises:
- a content of the composition (a) within the range extending from 30% to 40%;
- a content of ketimine (b) varying from 1% to 5%; and
- a content of the inorganic filler (c) ranging from 50% to 60%.

12. Method for laying a wood-based covering on a flat rigid support, comprising a stage of distributing, over the surface of said support, an effective amount of the adhesive composition as defined in one of Claims 1 to 11.

13. Laying method according to Claim 12, **characterized in that** the wood-based covering is a parquet flooring.

14. Laying method according to either of Claims 12 and 13, **characterized in that** the adhesive composition is distributed over the support in the form of a substantially homogeneous layer.

15. Assemblage comprising a flat rigid support covered with a wood-based covering via a substantially homogeneous layer of the adhesive composition, as defined in one of Claims 1 to 11, which is crosslinked and forms an adhesive joint.

16. Assemblage according to Claim 15, **characterized in that** the covering is a parquet flooring and **in that** it can be used as a floor.
